# EUROPÄISCHE PATENTSCHRIFT

(11) **EP 3 907 473 B1**
(45) Veröffentlichungstag und Bekanntmachung des Hinweises auf die Patenterteilung: **24.08.2022**
(21) Anmeldenummer: 20173226.0
(22) Anmeldetag: 06.05.2020
(51) Int. Cl.: G01D 5/04, G01D 5/14

(54) **WINKELMESSVORRICHTUNG FÜR SINGLE- UND MULTITURNMESSUNG**
ANGLE MEASURING DEVICE FOR SINGLE AND MULTITURN MEASUREMENT
DISPOSITIF DE MESURE D'ANGLE POUR UNE MESURE SIMPLE TOUR ET MULTITOUR

(43) Veröffentlichungstag der Anmeldung: 10.11.2021
(73) Patentinhaber: Baumer Electric AG, 8500 Frauenfeld (CH)
(72) Erfinder: Buchholz, Thomas, 78333 Stockach (DE)
(74) Vertreter: Strauss, Steffen

(56) Entgegenhaltungen:
- JP-A- 2002 116 057
- JP-A- 2005 195 126
- JP-A- 2011 022 074
- US-A1- 2013 113 471

## Beschreibung

Die Erfindung betrifft eine Winkelmessvorrichtung als Drehgeber bzw. Positionsgeber zur Ermittlung eines absoluten Drehwinkels nach dem Oberbegriff des Anspruchs 1.

Aus dem Stand der Technik sind Drehgeber bekannt, die auch eine Multiturnerfassung ermöglichen. Führt eine Welle mehr als eine volle Umdrehung aus, so kann die absolute Drehung nur dann gemessen werden, wenn die Erfassung während der Drehung stattfindet, da aufgrund der Periodizität eine bestimmte Position auf der Welle nach einer vollen Umdrehung wieder erreicht ist und auch bei weiteren Umdrehung periodisch wieder erreicht wird. Die entsprechende Sensorvorrichtung muss daher während einer absoluten Winkelerfassung, bei der auch die in einer bestimmten Zeitspanne ausgeführten vollen Umdrehungen mitgezählt werden, permanent mit Energie versorgt werden, z.B. an eine Spannungsquelle angeschlossen sein.

Beispielsweise ist aus der DE 10 2009 084 389 B4 ein Positionsgeber mit einer Magnetanordnung zur sog. Multiturnerfassung bekannt, welcher sich insbesondere eignet, um als Positionsgeber in besonders kleinen Bauräumen untergebracht zu werden. Zu diesem Zweck sind Flussleitelemente vorgesehen, welche die Magnetfeldlinien leiten und verhindern sollen, dass mehrere Sensorelemente trotz des geringen Bauraums vom gleichen Magneten beeinflusst werden. Gerade im ausgeschalteten Zustand sind daher regelmäßig aufwendige elektrische Maßnahmen notwendig, um auch eine Veränderung des absoluten Drehwinkels erkennen zu können. Insbesondere werden zu diesem Zweck batteriebetriebene oder in sonstiger Weise energieautarke Erfassungssysteme eingesetzt, was jedoch bedeutet, dass diese Systeme auch nur eine begrenzte Lebensdauer haben und eine Spannungsquelle wie eine Batterie nach einer gewissen Zeit auszutauschen ist. Darüber hinaus sind derartige elektrische Systeme oft auch sehr stark von der Umgebungstemperatur abhängig. Für Anwendungen im Low-Cost-Bereich eignen sich diese Systeme in der Regel daher nicht.

Aus der Druckschrift JP 2002 116 057 A ist ein batterieloser Multi-Rotations-Absolutwertgeber bekannt. Der Absolutwertgeber weist einen ersten Absolutwertgeber auf, welcher auf einer zu erfassenden Drehwelle vorgesehen ist. Ferner ist auf der Drehwelle ein Übersetzungsgetriebe vorgesehen und ein zweiter Absolutwertgeber. Das Übersetzungsgetriebe hat hierbei ein Sonnenrad mit einer Vielzahl von auf dem Umfang des Sonnenrades angeordneten Planetenrädern und ein mit dem Planetenrad in Eingriff stehendes Innenrad.

Aufgabe der Erfindung ist es, demgegenüber eine vereinfachte und kostengünstige Winkelmessvorrichtung vorschlagen zu können, mit der auch eine sogenannte Multiturnerfassung möglich ist.

Die Aufgabe wird, ausgehend von einer Winkelmessvorrichtung der eingangs genannten Art, durch die Merkmale des Anspruchs 1 gelöst.

Durch die in den abhängigen Ansprüchen genannten Maßnahmen sind vorteilhafte Ausführungen und Weiterbildungen der Erfindung möglich.

Die erfindungsgemäße Winkelmessvorrichtung kann grundsätzlich als Drehgeber bzw. Positionsgeber zur Ermittlung eines absoluten Drehwinkels eingesetzt werden. Sie kann zum einen unmittelbar mit einer antreibenden Welle verbunden werden, um gegebenenfalls hochauflösend die Umdrehungen bzw. die Drehzahl einer Welle zu erfassen; sie kann aber auch dazu verwendet werden, im ausgeschalteten Zustand die absolute Zahl der Umdrehungen zu speichern. Die erfindungsgemäße Winkelmessvorrichtung zeichnet sich dadurch aus, dass sie eine mechanische Speicherung des absoluten Drehwinkels verwenden kann, wodurch es nicht notwendig ist, das Erfassungssystem permanent mit Strom zu versorgen.

Hierzu umfasst die erfindungsgemäße Winkelmessvorrichtung ein Feldelement, welches ein Magnetfeld erzeugt und um eine erste Drehachse drehbar gelagert ist. Darüber hinaus ist das Feldelement um eine zweite Drehachse, die nicht mit der ersten Drehachse übereinstimmt und stattdessen zur ersten Drehachse versetzt verläuft, drehbar gelagert, sodass das Feldelement zudem in einer Rotationsebene um die zweite Drehachse rotieren kann. Je nach Ausführungsform der Erfindung können die erste und zweite Drehachse parallel zueinander ausgerichtet sein, was insbesondere vorteilhaft für eine Miniaturisierung der Winkelmessvorrichtung eingesetzt werden kann.

Denkbar ist aber auch, dass die erste und die zweite Drehachse zueinander verkippt angeordnet sind. Beispielsweise ist eine Ausführungsvariante denkbar, bei der sich das Feldelement auf der Mantelfläche eines Kegels um dessen Längsachse dreht.

Ferner ist ein Sensorarray mit wenigstens zwei Sensoren vorgesehen, die versetzt zur Rotationsebene positioniert sind, sodass diese nicht mit dem Feldelement kollidieren. Das vom Feldelement erzeugte Magnetfeld, insbesondere dessen Lage und Ausrichtung wird von dem Sensorarray erfasst. Die Sensoren sind entsprechend dazu ausgebildet, anhand des erzeugten Magnetfelds die Position des Feldelements in der Rotationsebene und seine Ausrichtung in Bezug auf seine Nord-Südpol-Ausrichtung zu bestimmen, indem das vom Feldelement erzeugte Magnetfeld in Abhängigkeit von der Position des Feldelements in der Rotationsebene und/oder in Abhängigkeit von der Nord-Südpol-Ausrichtung des Feldelements um die erste Drehachse gemessen wird. Das Sensorarray kann also die beiden Rotationsbewegungen um die erste und die zweite Drehachse, auch wenn diese mechanisch miteinander gekoppelt sind, grundsätzlich unabhängig voneinander bestimmen. Um eine präzise Positions- und Ausrichtungsbestimmung durchzuführen, sind wenigstens zwei an unterschiedlichen Stellen angeordnete Sensoren des Sensorarrays vorgesehen.

Diese Messtechnik ermöglicht, dass die Änderungen im Magnetfeld, insbesondere eine veränderte Ausrichtung des Magnetfelds bei einer Drehung, unterschiedliche Skalierung bzw. unterschiedliche Drehwinkelbereiche und Drehwinkelauflösungen beschreiben, je nachdem, ob sie durch die Eigenrotation um die erste Drehachse oder durch eine Rotation um die zweite Drehachse bedingt sind. Zum Beispiel kann die Drehung um die erste Drehachse sehr kleine Drehwinkel hoch auflösen, während die Drehung um die zweite Drehachse größere Drehwinkel beschreibt.

Bei einer besonders vorteilhaften Ausführungsform der Erfindung ist das Feldelement als Permanentmagnet ausgebildet bzw. umfasst einen Permanentmagnet, der im Gegensatz zu einem Elektromagneten keine eigene Stromversorgung benötigt. Somit eignet sich eine solche Ausführungsform auch gerade dazu, im stromlosen Betrieb verwendet zu werden. Es können vor allem Kosten eingespart werden, und es ist auch kein Austausch einer Batterie oder dergleichen notwendig. Besonders vorteilhaft ist es, einen sogenannten Diametralmagneten zu verwenden. Dieser kann in vorteilhafter Weise so angeordnet werden, dass er innerhalb seiner Grundfläche eine Nord-Süd-Ausrichtung der Magnetpole aufweist. Dreht sich der Diametralmagnet um eine Drehachse senkrecht zu seiner Grundfläche, so kann entsprechend diese Nord-Süd-Ausrichtung um die Drehachse rotieren. Auf diese Weise wird ermöglicht, dass eine besonders starke Magnetfeldänderung bei der Drehung detektiert werden kann, sodass die Genauigkeit und die Auflösung der Vorrichtung verbessert werden. Darüber hinaus zeichnet sich ein Diametralmagnet dadurch aus, dass er eine besonders kompakte Baueinheit darstellt und nicht aus einzelnen Feldelementen, wie z.B. mehreren Permanentmagneten, zusammengesetzt werden muss.

Eine besonders einfache und kompakte Bauweise kann bei einer Ausführungsvariante realisiert werden, bei der die erste Drehachse mit der Längsachse durch den Mittelpunkt des Feldelements zusammenfällt bzw. senkrecht zur Grundfläche des Feldelements sowie dabei durch den Mittelpunkt verläuft und/oder durch die Hauptachse zwischen Nord-und-Südpol des Feldelements und durch das geometrische Zentrum des Feldelements verläuft. Bei der Drehung um die erste Drehachse führt das Feldelement sodann eine Eigenrotation durch. In vorteilhafter Weise kann die zweite Drehachse, die versetzt zur ersten Drehachse angeordnet ist, gegebenenfalls auch außerhalb des Feldelements, je nach dessen Größe, verlaufen. Das Feldelement kann also zum Beispiel eine Drehung ähnlich wie die Erde um die Sonne durchführen, also mit einer Eigenrotation um die erste Drehachse und mit einer Rotationsbewegung um die zweite Drehachse. Beide Rotationsbewegungen weisen vorteilhafterweise eine Drehbewegung mit unterschiedlichen Skalen hinsichtlich einer Übersetzung der zu vermessenden Drehbewegung auf, insbesondere eine Untersetzung und eine Übersetzung auf hinreichend unterschiedlicher Skala im Vergleich zueinander. Bei einer Untersetzung werden Drehbewegungen in langsamere Drehbewegungen übersetzt, was insbesondere durch die Drehung um die zweite Drehachse geschehen kann. Hierdurch wird ermöglicht, dass eine Vielzahl an Drehungen durch die Verkleinerung der Skala gemessen werden kann, ohne dass ein sogenannter "Überlauf" stattfindet und die Anzahl der tatsächlich durchgeführten Drehungen außerhalb des eigentlichen Detektionsbereichs liegt. Bei einer 1:1 Übersetzung würde spätestens nach einer Periode nicht mehr festgestellt werden können, ob eine Multiturn-Drehung über einen Winkelbereich von mehr als 2π stattgefunden hat. Andererseits wiederum können kleinere Drehungen so übersetzt werden, dass diese mit einer hinreichenden Präzision und großer Auflösung wiederum erfassbar sind; hierzu eignet sich die Rotation, insbesondere die Eigenrotation des Feldelements um die erste Drehachse.

In vorteilhafter Weise zeichnet sich die erfindungsgemäße Winkelmessvorrichtung nun dadurch aus, dass eine mechanische Speicherung einer Drehung, auch im ausgeschalteten Zustand ohne jegliche Stromversorgung möglich ist. Wird eine Drehung durchgeführt, so kann die vorgeschlagene Magnetanordnung in Bewegung gesetzt werden. Ganzzahlige Vielfache einer Drehung bei einer sogenannten Multiturn-Bewegung werden zum Beispiel durch die Rotation um die zweite Drehachse erfasst, während kleinere Drehungen durch die Drehung des Magneten um die erste Drehachse übersetzt werden. Ein Überlauf wird vermieden und die Information, die ansonsten durch die Periodizität der Drehbewegung verloren ginge, wird mechanisch gespeichert, weil sich die Position des Feldelementes nach der Drehung gegenüber dem Anfangszustand geändert hat.

Erfindungsgemäss wird eine Realisierung eines derartigen Positionsgebers umgesetzt, indem ein Gehäuse und ein Getriebe vorgesehen sind, wobei das Feldelement über das Getriebe um die erste bzw. zweite Drehachse drehbar zum Gehäuse gelagert wird. In besonders vorteilhafter Weise eignet sich bei einer Weiterbildung der Erfindung ein Planetengetriebe bzw. ein Wolfromgetriebe hierzu. Bei einem Planetengetriebe oder Umlaufrädergetriebe sind Achsen vorhanden, die auf Kreisbahnen im Gestell umlaufen. Somit können in vorteilhafter Weise unterschiedliche Rotationsbewegungen auf vergleichsweise engem Raum kompakt ausgeführt werden.

Darüber hinaus zeichnen sich derartige Planetengetriebe auch dadurch aus, dass sie platzsparend kaskadiert werden können, wodurch der Grad der Untersetzung gewählt werden kann und der Bereich der sog. Multiturn-Erfassung im Grunde beliebig erweiterbar ist. Es ist besonders vorteilhaft, das Getriebe als kaskadiertes Getriebe auszubilden, weil hierdurch eine im Grunde beliebig große Untersetzung ermöglicht wird. Hierdurch kann der Skalenbereich, innerhalb dem eine Messung möglich ist und kein Überlauf stattfindet, praktisch beliebig erweitert werden. Das Planetengetriebe kann als reduziertes Koppelgetriebe, nämlich als sogenanntes Wolfromgetriebe ausgebildet sein. Eine Ausbildung als Wolfromgetriebe ermöglicht eine besonders kompakte Ausführung eines Koaxialgetriebes mit hoher Über- bzw. Untersetzung.

Um jedoch eine Veränderung einer Positionierung bzw. Ausrichtung von Feldelementen feststellen zu können, müssen eine aktuelle Position bzw. Ausrichtung und eine Ausgangsposition / -ausrichtung miteinander verglichen werden. Grundsätzlich kann in vorteilhafter Weise eine Auswertungsvorrichtung vorgesehen sein, um die vom Sensorarray bestimmte Position des Feldelements sowohl in der Rotationsebene als auch dessen Nord-Süd-Pol-Ausrichtung zu erfassen und entsprechend in eine Umdrehungszahl umzusetzen. Daraus können sowohl die relative Winkelposition und die relative Winkelausrichtung zwischen diesen beiden Zeitpunkten (erster Zeitpunkt als Ausgangszustand, zweiter Zeitpunkt als aktueller Zustand) bestimmt werden, wobei jeder Winkelbereich zwischen 0 und 2π liegt. Außerdem wird die relative Multiturnposition im ersten und zweiten Zeitpunkt bestimmt, welche also zusätzlich darüber Auskunft gibt, wie viele ganzzahlige Umdrehungen in dieser Zwischenzeit erfolgt sind.

Die Ursprungsposition zum ersten Zeitpunkt kann entweder fest vorgegeben werden. Zu diesem Zeitpunkt kann beispielsweise also eine Kalibrierung vorgenommen werden, indem das bzw. die Feldelemente so angeordnet werden, dass ihre Position und damit auch das entsprechend erzeugte Magnetfeld vorbekannt sind. Denkbar ist auch, dass die Auswerteeinheit so ausgebildet ist, dass die mathematische Rechenvorschrift bzw. Zuordnungsvorschrift, welche die Auswertung ermöglicht, bereits die vorgegebene Ursprungsposition berücksichtigt.

Ferner ist aber auch denkbar, dass zum Beispiel die erste Position zum ersten Zeitpunkt in einem Speicher der Auswerteeinheit festgehalten wird und beim Auswerten die aktuelle Messung mit der Ursprungsmessung verglichen wird. Die entsprechende Ursprungsposition zum Ursprungszeitpunkt kann eigens gemessen und in einen festen Speicher festgehalten werden, der sodann zum Zeitpunkt der Auswertung nach dem entsprechenden Zeitraum unmittelbar ausgewertet wird. Denkbar ist es, bei einer vorteilhaften Variante einen Nur-Lese-Speicher (ROM) vorzusehen, indem die Position bzw. das Ursprungsfeld festgehalten wird.

Je nachdem, wie die zu erwartenden Feldverläufe des Feldelementes sind, können die Sensoren zum Beispiel als ein-oder mehrdimensionale Magnetfeldsensoren ausgebildet sein. Zum einen können hier Kosten eingespart werden, zum anderen kann durch mehrdimensionale Magnetfeldsensoren auch die Ausrichtung des Feldelementes besonders gut und präzise festgehalten werden, sodass insbesondere die Auflösung und Genauigkeit verbessert werden kann.

Die Erfindung zeichnet sich insbesondere auch dadurch aus, dass es möglich ist, mit lediglich einem einzigen Feldelement auszukommen. Selbst dann, wenn eine große Anzahl von Drehungen vermessen werden soll, ist es immer noch möglich, eine gute Auflösung zu realisieren und zum Beispiel durch ein kaskadiertes Getriebe den Überlauf bei Multiturn-Bewegungen auf eine möglichst hohe Umdrehungszahl zu setzen.

Um eine kompakte Vorrichtung herstellen zu können, kann das Gehäuse mit einem Hohlrad verbunden sein, d.h. das Hohlrad ist in Bezug auf das Gehäuse feststehend, wobei im Hohlrad zumindest ein Teil des Planetengetriebes untergebracht wird. Durch ein im Inneren angebrachtes Zahnrad-Profil des Hohlrads kann das Gehäuse somit unmittelbar mechanische Kräfte bzw. Drehbewegungen auf das Getriebe übertragen, und dies auch mit einem entsprechend großen Drehmoments, sodass die Winkelmessvorrichtung auch mit der ausreichenden Empfindlichkeit arbeiten kann.

Das Feldelement kann insbesondere im Zentrum eines Umlaufrads befestigt, etwa eingeklemmt oder vom eigentlichen Umlaufrad (aus Kunststoff) umspritzt sein, sodass das Feldelement und das Umlaufrad gemeinsam Drehungen um die erste bzw. zweite Drehachse ausführen können. Die Übertragung eines Drehmoments auf das Umlaufrad führt somit unmittelbar zur Drehung des Feldelements und löst eine Änderung des Magnetfelds aus, und zwar hinsichtlich der Ausrichtung des Feldelements und hinsichtlich seiner Position in Bezug zum Hohlrad, sodass diese unmittelbar und genau detektiert werden kann. Darüber hinaus wird ermöglicht, dass die Vorrichtung sehr wenig Bauteile für die eigentlichen Messphysik benötigt, also an Kompaktheit gewonnen wird, die Mechanik sehr einfach ausgebildet ist und dadurch auch Kosten eingespart werden können.

Das Getriebe wiederum kann bei der Ausführungsform der Erfindung ein Sonnenrad aufweisen, das unmittelbar oder mittelbar mit dem Umlaufrad mechanisch gekoppelt ist. Umgekehrt kann ein solches Sonnenrad bei einem Drehgeber aber auch an eine Welle gekoppelt sein. Die Welle kann mit einem Antrieb verbunden werden, sodass durch die Drehbewegung eine Drehzahlmessung möglich ist.

Wenigstens zwei der Sensoren können auf einem Kreis um die zweite Drehachse herum angeordnet sein, wobei dabei der Abstand der auf dem Kreis angeordneten Sensoren von der zweiten Drehachse kleiner oder gleich dem Abstand der ersten Drehachse von der zweiten Drehachse sein kann. Liegen die Sensoren somit auf einem Kreis im gleichen Abstand zur zweiten Drehachse wie das Zentrum (bzw. die erste Drehachse) des Feldelements, so überstreicht das Feldelement die Sensoren bei der Bewegung im Getriebe.

In vorteilhafter Weise kann über eine Wahl eines Übersetzungsverhältnisses zwischen einem Antriebsrad und dem Umlaufrad eine Auflösung der Winkelmessvorrichtung bestimmt werden.

Das Feldelement bewegt sich auf einem Kreis um die zweite Drehachse. Liegen die Sensoren jedoch innerhalb dieses Kreises mit kleinerem Abstand zur zweiten Drehachse, so kann vermieden werden, dass der maximal mögliche Abstand des Feldelements zu einem Sensor so groß wird wie in dem Fall, dass der Abstand exakt so groß ist die Distanz von erster und zweiter Drehachse. Auch hierdurch kann eine Optimierung zwischen Auflösung und Messsignal erfolgen. Wie bereits dargestellt, eignet sich die Erfindung insbesondere als Präzisionsdrehgeber, aber auch als Multiturn-Positionsgeber zur mechanischen Speicherung, ohne dass eine permanent arbeitende Detektionsvorrichtung mit (unabhängiger) Spannungsquelle bereitgestellt werden muss.

Die Erfindung zeichnet sich insbesondere auch dadurch aus, dass sie bei unverändertem Grundaufbau mit einer sich drehenden Welle verbunden werden kann, um als Drehgeber zu fungieren, gleichzeitig aber auch als Positionsgeber zur Messung von Drehbewegung im unbestromten Zustand.

### AUSFÜHRUNGSBEISPIELE

Ausführungsbeispiele der Erfindung sind in den Zeichnungen dargestellt und werden nachstehend unter Angabe weiterer Einzelheiten und Vorteile näher erläutert. Im Einzelnen zeigen:
- Fig. 1:: ein schematische Darstellung eines erfindungsgemässen Aufbaus der Winkelmessvorrichtung,
- Fig. 2:: eine Ausführungsvariante einer Winkelmessvorrichtung gem. der Erfindung,
- Fig. 3, 4:: verschiedene Sensoranordnungen für eine Winkelmessvorrichtung gem. Fig. 1, 2 und 5 und
- Fig. 5:: eine Winkelmessvorrichtung mit einem kaskadierten Getriebe gem. der Erfindung.

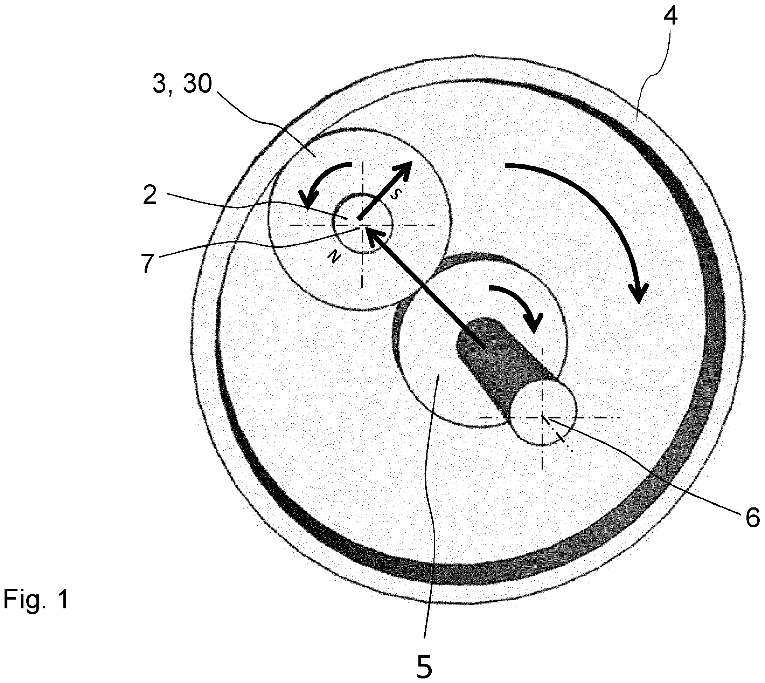

Figur 1 zeigt eine schematische Darstellung eines erfindungsgemässen Aufbaus einer Winkelmessvorrichtung 1, die mit einem Diametralmagnet 2 als Feldelement, welcher fest in einem Planetenrad 30 eingebaut ist. Das Planetenrad 30 hat dabei die Funktion eines Umlaufrades 3. Das Umlaufrad 3 greift einerseits in Hohlrad 4 und andererseits in ein Sonnenrad 5 ein. Das Sonnenrad 5 treibt hierbei das Umlaufrades 3 an und versetzt damit den Diametralmagnet 2 in eine Drehung um eine erste Drehachse 7. Bei einem feststehenden Hohlrad 4 bewegt sich das Umlaufrad 3 um eine zweite Drehachse 6.

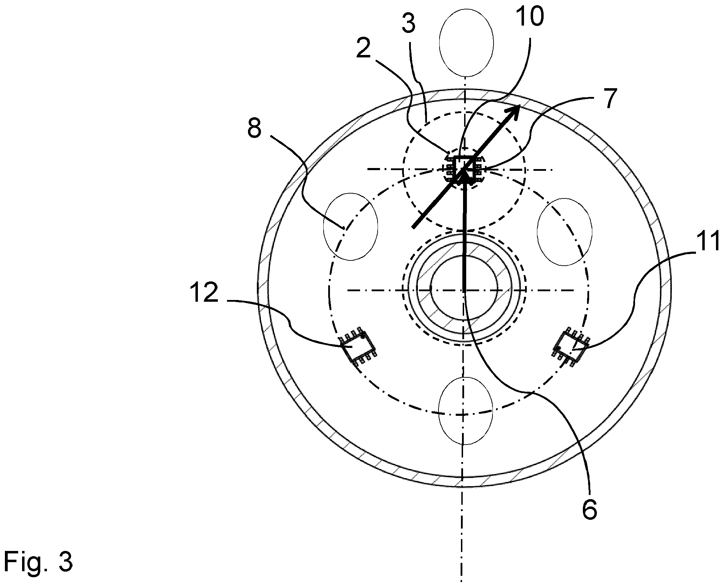

Ferner ist ein Sensorarray mit wenigstens zwei Sensoren 10, 11, 12 vorgesehen, die versetzt zu einer Rotationsebene 8 positioniert sind, gezeigt in der Figur 3.

Das Sensorarray ist dazu ausgebildet, die Position des Diametralmagnet 2 in der Rotationsebene 8 (siehe Fig. 3) und seine Ausrichtung in Bezug auf seine Nord-Süd-Pol-Ausrichtung (dargestellt in Fig. 1) zu bestimmen, indem das vom Diametralmagnet 2 erzeugte Magnetfeld in Abhängigkeit von der Position des Diametralmagnet 2 in der Rotationsebene 8 (siehe Fig. 3) und in Abhängigkeit von der Nord-Süd-Pol-Ausrichtung des Diametralmagnet 2 um die erste Drehachse 7 gemessen wird.

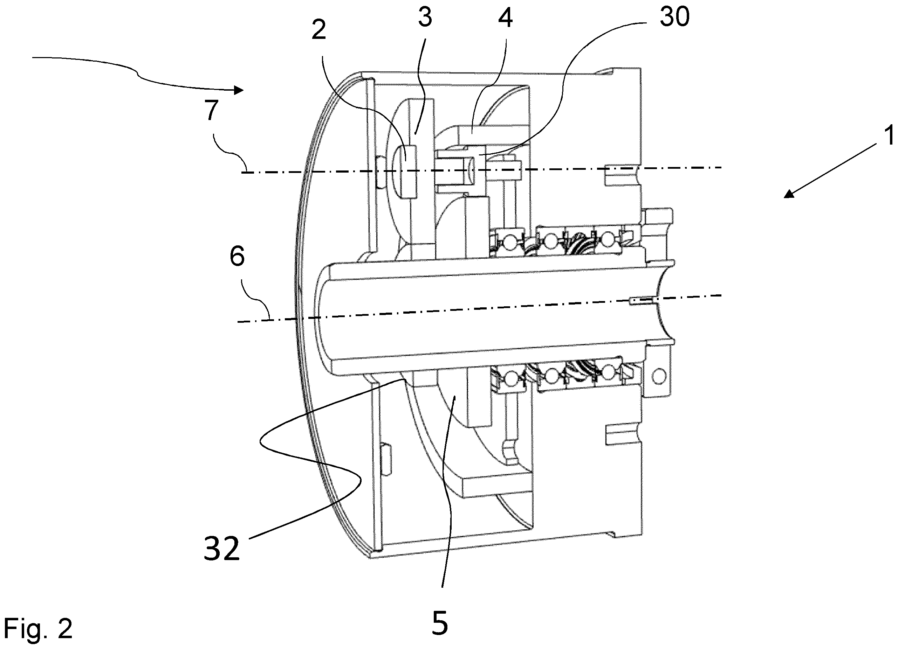

Figur 2 zeigt eine Ausführungsvariante der erfindungsgemäßen Winkelmessvorrichtung 1 mit dem Diametralmagnet 2 als Feldelement, der fest in dem Umlaufrad 3 (Zwischenrad) eingebaut ist. Das Umlaufrad 3 greift über eine Lagerung in das Planetenrad 30, welches einerseits in das Hohlrad 4 und andererseits in das Sonnenrad 5 (Zentralrad) eingreift, sodass diese mechanisch miteinander gekoppelt sind. Das Sonnenrad 5 ist drehbar auf einer Drehachse 6 gelagert. Die Getriebeanordnung aus Hohlrad 4, zentral auf der Achse 6 des gelagerten Sonnenrad 5 (Achse 6 fällt mit der Drehachse des Sonnenrads 5 zusammen) und dem Planetenrad 30 bildet zusammen ein Planetengetriebe. In dem dargestellten Beispiel ist das Hohlrad 4 (gegenüber einem Gehäuse) festgestellt und das Sonnenrad 5 wird angetrieben. Das Hohlrad 4 ist beispielsweise mit dem Gehäuse verbunden. Wird das Sonnenrad 5 angetrieben, so kann sich das Umlaufrad 3 mit dem Permanentmagneten 2 entsprechend in dem Hohlrad 4 drehen. Das Umlaufrad 3 dreht sich angetrieben durch das Antriebsrad 32 selbst um eine Drehachse 7, um die sich entsprechend dann auch der Magnet 2 dreht. Die Drehachse 7 und die Drehachse 6 sind parallel zueinander ausgerichtet. Die Ebene, in der sich das Sonnenrad 5 und das Umlaufrad 3 bewegen, ist eine gemeinsame Rotationsebene 8.

Bei der Rotation des Diametralmagneten 2 um die erste Drehachse 7 dreht sich die Nord-Süd-Ausrichtung des Diametralmagneten 2 entsprechend in der Rotationsebene 8. Gleichzeitig dreht sich das Umlaufrad 3 zusammen mit dem Diametralmagnet 2 um die Achse 6. Wird das Sonnenrad 5 gedreht und das Gehäuse, das fest mit dem Hohlrad 4 verbunden ist, fest gelagert, so bewegt sich das Umlaufrad 3 zusammen mit dem Magnet 2, sodass die Position entsprechend festgestellt werden kann, an der sich der Diametralmagnet 2 befindet und zugleich wie seine Nord-Süd-Richtung ausgerichtet ist. Aus diesem Grund ist es vorteilhaft, dass die Nord-Süd Ausrichtung des Diametralmagneten 2 ebenfalls parallel zur Rotationsebene 8 verläuft.

Die Rotation des Umlaufrads 3 und damit auch des Diametralmagneten 2 um die Drehachse 7 wird durch das Übersetzungsverhältnis von Umlaufrad 3zu dem Antriebsrad 32 bestimmt.

Über eine Wahl eines Übersetzungsverhältnisses zwischen dem Antriebsrad 32 und dem Umlaufrad 3 ist eine Auflösung der Winkelmessvorrichtung bestimmbar. Damit ergibt sich der Vorteil, dass die Genauigkeit und Auflösung der Winkelmessvorrichtung gezielt einstellbar ist.

Die Rotation um die Drehachse 6 dagegen stellt eine Untersetzung in eine langsamere Rotation dar, sodass auch Mehrfachumdrehungen erfasst werden können. Die Änderung der Position des Umlaufrads 3 bzw. die Änderung des Magnetfelds des Diametralmagneten 2 stellt eine (mechanisch) gespeicherte Information dar, welche die Umdrehungszahl codiert.

Im Übrigen kann die Winkelmessvorrichtung 1 auch als Drehgeber verwendet werden, wenn die Drehung einer Welle bestimmt werden soll, die mit dem Sonnenrad 5 bzw. den Antriebsrad 32 entsprechend verbunden ist. Kleinere Winkelbewegungen sind dadurch sichtbar, wie der Diametralmagnet 2 in seiner Nord-Süd-Ausrichtung ausgerichtet ist. Umdrehungen von größerem absoluten Winkelbetrag sind dadurch sichtbar, an welcher Position sich das Umlaufrad um die Drehachse 6 herum befindet.

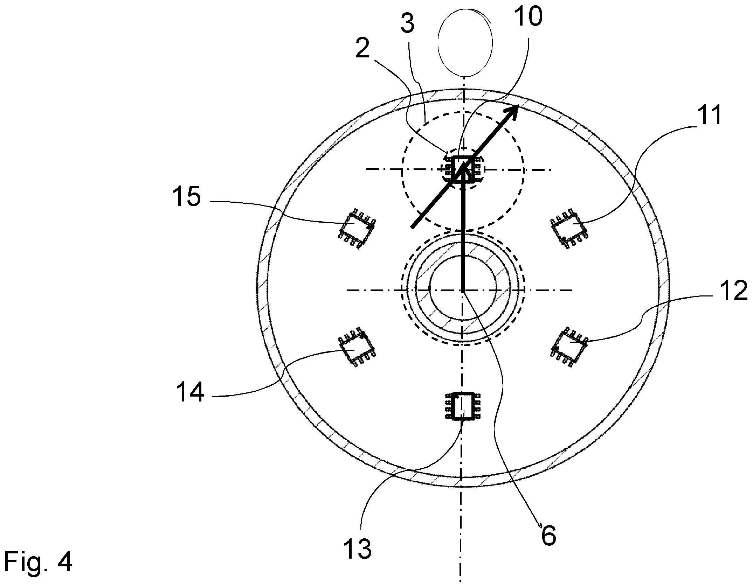

In den Figuren 3 und 4 ist dargestellt, wie entsprechende Sensoren 10, 11, 12 bzw. 10, 11, 12, 13, 14, 15 in Bezug auf die Drehung des Umlaufrades 3 bzw. des Permanentmagneten 2 um die Drehachse 6 herum verlaufen können. Der Unterschied in den Figuren 2 und 3 besteht darin, dass mit zunehmender Anzahl an Sensoren die Messgenauigkeit erhöht ist.

Insgesamt sind die Sensoren 10-15 in den Figuren 3 und auch 4 in einer Ebene parallel zur Ebene 8 verschoben angeordnet. Die Sensoren 10-15 in Figur 4 werden in der Regel an einzelnen Stellen bei gleichen Diametralmagneten 2 ein größeres Magnetfeld aufgrund ihrer Nähe erfahren. Allerdings variieren auch die Abstände zu einem betrachteten Sensor 10-15 bei entgegengesetzter angeordneter Position des Diametralmagneten 2 auch stärker als in Figur 3.

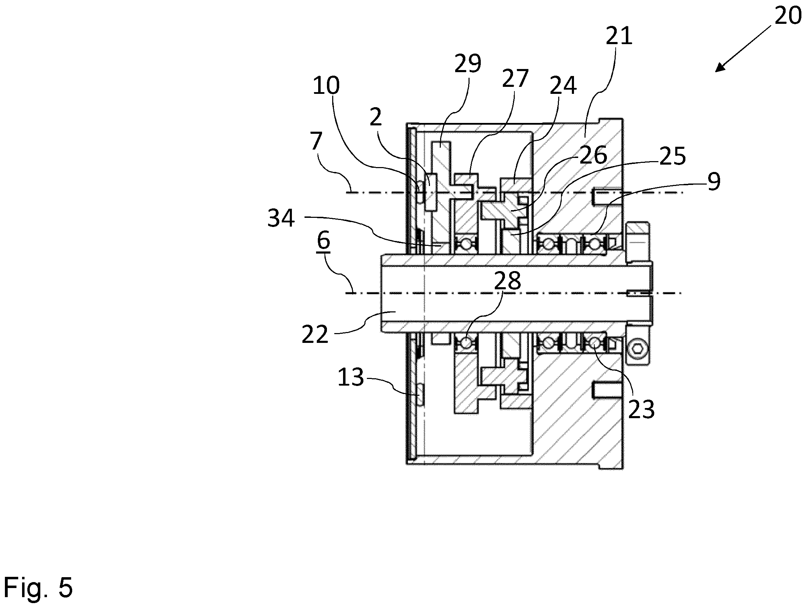

In Figur 5 wiederum ist eine Winkelmessvorrichtung 20 mit einem kaskadierten Getriebe, wie zum Beispiel ein Wolfromgetriebe zu sehen. Das Gehäuse 21 wird von einer Welle 22 durchsetzt, die gegenüber dem Gehäuse 21 in einem Lager 23 gelagert ist. Fest am Gehäuse 21 ist ein Hohlrad 24 angeordnet, in welchem ein Sonnenrad 25 und ein damit mechanisch gekoppeltes Planetenrad 26 als Planetengetriebe angeordnet ist. Das Planetenrad 26 wiederum koppelt mechanisch mit einem weiteren Hohlrad 27, d.h. deren Zähne stehen miteinander in Eingriff. Das Hohlrad 27 ist über ein Lager 28 gegenüber der Welle 22 gelagert. Daran ist wiederum ein Umlaufrad 29 gekoppelt, welches mit einem Diametralmagneten 2 fest verbunden ist, der sich durch die Drehung des Umlaufrades 29 dreht, zum einen in Eigenrotation um die Drehachse 7 (erste Drehachse), zum anderen um die Drehachse 6 (zweite Drehachse), welche zugleich die Drehachse der Welle 22 bildet. Die Drehzahl der Eigenrotation um die Drehachse 7 wird über das Übersetzungsverhältnis von Umlaufrad 29 und Antriebsrad 34 bestimmt.

Durch die Kaskadierung des Getriebes ist es möglich, dass mehrere Umdrehungen gemessen werden können (Multiturnerfassung), da einerseits das Untersetzungsverhältnis für eine der Rotationsbewegungen (um die zweite Drehachse) im Grunde beliebig gewählt werden kann, während gleichzeitig die Auflösung des Winkels dann entsprechend hoch ist, weil zudem eine andere Rotationsbewegung mit einem deutlich höheren Übersetzungsverhältnis (um die erste Drehachse) realisierbar ist, und zwar trotz der Kompaktheit der Vorrichtung. Zudem genügt im Grunde ein einziges Feldelement 2, das als einzelner Permanentmagnet, vorzugsweise als Diametralmagnet ausgebildet ist. Eine Magnetanordnung mit mehreren Permanentmagneten ist grundsätzlich nicht ohne Weiteres notwendig.

## Patentansprüche

1. Winkelmessvorrichtung (1, 20) als Drehgeber und/oder Positionsgeber zur Ermittlung eines absoluten Drehwinkels, umfassend:
ein Feldelement (2), welches ein Magnetfeld erzeugt und um eine erste Drehachse (7) drehbar gelagert ist,
wobei das Feldelement (2) um eine zweite Drehachse (6), die zur ersten Drehachse (7) versetzt verläuft, drehbar gelagert ist, sodass das Feldelement (2) in einer Rotationsebene (8) um die zweite Drehachse (6) rotiert,
mit einem Sensorarray mit wenigstens zwei Sensoren (10, 11, 12, 13, 14, 15), die versetzt zu der Rotationsebene (8) positioniert sind,
wobei das Sensorarray dazu ausgebildet ist, die Position des Feldelements (2) in der Rotationsebene (8) und seine Ausrichtung in Bezug auf seine Nord-Süd-Pol-Ausrichtung zu bestimmen, indem das vom Feldelement (2) erzeugte Magnetfeld in Abhängigkeit von der Position des Feldelements (2) in der Rotationsebene (8) und/oder in Abhängigkeit von der Nord-Süd-Pol-Ausrichtung des Feldelements (2) um die erste Drehachse (7) gemessen wird,
wobei die Winkelmessvorrichtung ein Gehäuse (21) und ein Getriebe umfasst und
wobei das Feldelement (2) über das Getriebe um die erste und zweite Drehachse (6, 7) drehbar zum Gehäuse (21) gelagert ist.

2. Winkelmessvorrichtung (1, 20) nach einem der vorgenannten Ansprüche, **dadurch gekennzeichnet, dass** das Feldelement (2) als Permanentmagnet, insbesondere als Diametralmagnet ausgebildet ist.

3. Winkelmessvorrichtung (1, 20) nach einem der vorgenannten Ansprüche, **dadurch gekennzeichnet, dass** die Nord-Süd-Pol-Ausrichtung des Feldelements (2) parallel zur Rotationsebene (8) verläuft.

4. Winkelmessvorrichtung (1, 20) nach einem der vorgenannten Ansprüche, **dadurch gekennzeichnet, dass** die erste und die zweite Drehachse (6, 7) parallel zueinander angeordnet sind.

5. Winkelmessvorrichtung (1, 20) nach einem der vorgenannten Ansprüche, **dadurch gekennzeichnet, dass** die erste Drehachse (7):
mit der Längsachse durch den Mittelpunkt des Feldelements (2) zusammenfällt und/oder
senkrecht zur Grundfläche des Feldelements (2) sowie dabei durch den Mittelpunkt verläuft und/oder
durch die Hauptachse zwischen Nord- und Südpol des Feldelementes (2) und durch das geometrische Zentrum des Feldelements (2) verläuft.

6. Winkelmessvorrichtung (1, 20) nach einem der vorgenannten Ansprüche, **dadurch gekennzeichnet, dass** das Getriebe ein Planetengetriebe und/oder ein Wolfromgetriebe umfasst.

7. Winkelmessvorrichtung (1, 20) nach einem der vorgenannten Ansprüche, **dadurch gekennzeichnet, dass** die Winkelmessvorrichtung eine Auswertevorrichtung umfasst, um die vom Sensorarray bestimmte Position des Feldelements (2) in der Rotationsebene (8) und seine vom Sensorarray bestimmte Ausrichtung in Bezug auf seine Nord-Süd-Pol-Ausrichtung zu einem ersten Zeitpunkt zu speichern, wobei die Auswertevorrichtung dazu ausgebildet ist, die vom Sensorarray zu einem zweiten Zeitpunkt bestimmte Position des Feldelements (2) in der Rotationsebene (8) und seine vom Sensorarray bestimmte Ausrichtung in Bezug auf seine Nord-Süd-Pol-Ausrichtung mit der zum ersten Zeitpunkt zu vergleichen, und daraus die relative Winkelposition und die relative Winkelausrichtung zwischen dem ersten und dem zweiten Zeitpunkt in einem Winkelbereich zwischen 0 und 2π und/oder die relative Multiturnposition zwischen dem ersten und dem zweiten Zeitpunkt, welche zusätzlich zur relativen Winkelposition auch die Information über die Anzahl der Umdrehungen zwischen dem ersten und zweiten Zeitpunkt umfasst, zu bestimmen.

8. Winkelmessvorrichtung (1, 20) nach einem der vorgenannten Ansprüche, **dadurch gekennzeichnet, dass** die Sensoren (10, 11, 12, 13, 14, 15) als ein- oder mehrdimensionale Magnetfeldsensoren ausgebildet sind.

9. Winkelmessvorrichtung (1, 20) nach einem der vorgenannten Ansprüche, **dadurch gekennzeichnet, dass** das Getriebe als kaskadiertes Getriebe ausgebildet ist.

10. Winkelmessvorrichtung (1, 20) nach einem der vorgenannten Ansprüche, **dadurch gekennzeichnet, dass** das Gehäuse als feststehendes Hohlrad (4, 24) ausgebildet ist und/oder mit dem Hohlrad (4, 24) drehfest verbunden ist.

11. Winkelmessvorrichtung (1, 20) nach einem der vorgenannten Ansprüche, **dadurch gekennzeichnet, dass** das Feldelement (2) im Zentrum eines Umlaufrads (3, 29) befestigt ist, so dass das Feldelement (2) und das Umlaufrad (3, 29) gemeinsam Drehungen um die erste und zweite Drehachse (6, 7) ausführen können.

12. Winkelmessvorrichtung (1, 20) nach Anspruch 11, **dadurch gekennzeichnet, dass** das Getriebe ein Sonnenrad (5, 25) aufweist, das unmittelbar oder mittelbar mit dem Umlaufrad (3, 29) mechanisch gekoppelt ist.

13. Winkelmessvorrichtung (1, 20) nach einem der Ansprüche 11 oder 12, **dadurch gekennzeichnet, dass** über eine Wahl eines Übersetzungsverhältnisses zwischen einem Antriebsrad (32, 34) und dem Umlaufrad (3, 29) eine Auflösung der Winkelmessvorrichtung bestimmbar ist.

14. Verwendung einer Winkelmessvorrichtung (1, 20) nach einem der vorgenannten
Ansprüche als:
Drehgeber zum Bestimmen einer Position und/oder Winkelgeschwindigkeit und/oder einer Welle (22), oder
Positionsgeber zum Bestimmen einer absoluten Position eines Objekts, insbesondere zur mechanischen Erfassung von Drehungen ohne elektrische Zählvorrichtung während der Drehungen.

## Claims

1. Angle measuring device (1, 20) as a rotary encoder and/or position encoder for determining an absolute angle of rotation, comprising:
one field element (2) which generates a magnetic field and is rotatably mounted about a first axis of rotation (7),
whereby the field element (2) is rotatably mounted about a second axis of rotation (6),
which is offset with respect to the first axis of rotation (7), so that the field element (2) rotates in a plane of rotation (8) about the second axis of rotation (6),
with a sensor array with at least two sensors (10, 11, 12, 13, 14, 15) positioned offset with respect to the plane of rotation (8),
whereby the sensor array is designed to determine the position of the field element (2) in the plane of rotation (8) and its orientation with respect to its north-south pole orientation by measuring the magnetic field generated by the field element (2) as a function of the position of the field element (2) in the plane of rotation (8) and/or as a function of the north-south pole orientation of the field element (2) about the first axis of rotation (7),
whereby the angle measuring device comprises a housing (21) and a gear unit, and
whereby the field element (2) is rotatably mounted about the first and second axis of rotation (6, 7) relative to the housing (21) through the gear unit.

2. Angle measuring device (1, 20) in accordance with one of the preceding Claims, **characterized in that** the field element (2) is designed as a permanent magnet, in particular as a diametral magnet.

3. Angle measuring device (1, 20) in accordance with one of the preceding Claims, **characterized in that** the north-south pole orientation of the field element (2) is parallel to the plane of rotation (8).

4. Angle measuring device (1, 20) in accordance with one of the preceding Claims, **characterized in that** the first and second axes of rotation (6, 7) are arranged parallel to one another.

5. Angle measuring device (1, 20) in accordance with one of the preceding Claims, **characterized in that** the first axis of rotation (7):
coincides with the longitudinal axis through the center of the field element (2) and/or runs perpendicular to the surface area of the field element (2) and passes through the center point and/or
runs through the main axis between the north and south poles of the field element (2) and through the geometric center of the field element (2).

6. Angle measuring device (1, 20) in accordance with one of the preceding Claims, **characterized in that** the gear unit comprises a planetary gear unit and/or a Wolfrom gear unit.

7. Angle measuring device (1, 20) in accordance with one of the preceding Claims, **characterized in that** the angle measuring device comprises an evaluation device in order to store the position of the field element (2) in the plane of rotation (8) determined by the sensor array and its orientation determined by the sensor array with respect to its north-south pole orientation at a first point in time, the evaluation device being designed to compare the position of the field element (2) in the plane of rotation (8) determined by the sensor array at a second point in time and its orientation determined by the sensor array with respect to its north-south pole orientation with the position determined at the first point in time, and from this to determine the relative angle position and the relative angular orientation between the first and the second point in time in an angular range between 0 and 2π and/or the relative multi-turn position between the first and the second point in time, which in addition to the relative angle position also comprises the information about the number of revolutions between the first and the second point in time.

8. Angle measuring device (1, 20) in accordance with one of the preceding Claims, **characterized in that** the sensors (10, 11, 12, 13, 14, 15) are designed as single or multi-dimensional magnetic field sensors.

9. Angle measuring device (1, 20) in accordance with one of the preceding Claims, **characterized in that** the gear unit is designed as a cascaded gear unit.

10. Angle measuring device (1, 20) in accordance with one of the preceding Claims, **characterized in that** the housing is designed as a fixed ring gear (4, 24) and/or is connected to the ring gear (4, 24) in a rotationally fixed manner.

11. Angle measuring device (1, 20) in accordance with one of the preceding Claims, **characterized in that** the field element (2) is fixed in the center of an orbital wheel (3, 29) so that the field element (2) and the orbital wheel (3, 29) can perform rotations together about the first and second axes of rotation (6, 7).

12. Angle measuring device (1, 20) in accordance with Claim 11, **characterized in that** the gear unit comprises a sun gear (5, 25) which is mechanically coupled directly or indirectly to the orbital wheel (3, 29).

13. Angle measuring device (1, 20) in accordance with one of the Claims 11 or 12, **characterized in that** a resolution of the angle measuring device can be determined by selecting a transmission ratio between a drive wheel (32, 34) and the orbital wheel (3, 29).

14. Use of an angle measuring device (1, 20) in accordance with one of the preceding Claims as:
a rotary encoder for determining a position and/or angular velocity and/or a shaft (22),
or
a position sensor for determining the absolute position of an object, in particular for the mechanical detection of rotations without an electrical counting device during the rotations.

## Revendications

1. Dispositif de mesure d'angle (1, 20) en tant que codeur et/ou codeur de position pour déterminer un angle de rotation absolu, comprenant :
un élément champ (2), qui génère un champ magnétique et est monté rotatif autour d'un premier axe de rotation (7),
l'élément champ (2) étant monté rotatif autour d'un second axe de rotation (6), qui s'étend de manière décalée par rapport au premier axe de rotation (7), de telle sorte que l'élément champ (2) se met en rotation dans un plan de rotation (8) autour du second axe de rotation (6),
avec un ensemble de détecteurs doté d'au moins deux détecteurs (10, 11, 12, 13, 14, 15), qui sont positionnés de manière décalée par rapport au plan de rotation (8), l'ensemble de détecteurs étant conçu pour déterminer la position de l'élément champ (2) dans le plan de rotation (8) et son orientation par rapport à son orientation des pôles nord-sud, en mesurant le champ magnétique généré par l'élément champ (2) en fonction de la position de l'élément champ (2) dans le plan de rotation (8) et/ou en fonction de l'orientation des pôles nord-sud de l'élément champ (2) autour du premier axe de rotation (7),
le dispositif de mesure d'angle comprenant un boîtier (21) et un réducteur et
l'élément champ (2) étant monté rotatif sur le réducteur autour du premier et du second axe de rotation (6, 7) par rapport au boîtier (21).

2. Dispositif de mesure d'angle (1, 20) selon l'une des revendications précédentes, **caractérisé en ce que** l'élément champ (2) se présente sous la forme d'un aimant permanent, en particulier d'un aimant diamétrique.

3. Dispositif de mesure d'angle (1, 20) selon l'une des revendications précédentes, **caractérisé en ce que** l'orientation des pôles nord-sud de l'élément champ (2) est parallèle au plan de rotation (8).

4. Dispositif de mesure d'angle (1, 20) selon l'une des revendications précédentes, **caractérisé en ce que** les premier et second axes de rotation (6, 7) sont disposés en parallèle l'un par rapport à l'autre.

5. Dispositif de mesure d'angle (1, 20) selon l'une des revendications précédentes, **caractérisé en ce que** le premier axe de rotation (7) :
coïncide avec l'axe longitudinal à travers le centre de l'élément champ (2) et/ou est perpendiculaire à la surface de base de l'élément champ (2) et s'étend ainsi à travers le centre et/ou
s'étend à travers l'axe principal entre le pôle nord et le pôle sud de l'élément champ (2) et à travers le centre géométrique de l'élément champ (2).

6. Dispositif de mesure d'angle (1, 20) selon l'une des revendications précédentes, **caractérisé en ce que** le réducteur comprend un réducteur planétaire et/ou un réducteur Wolfrom.

7. Dispositif de mesure d'angle (1, 20) selon l'une des revendications précédentes, **caractérisé en ce que** le dispositif de mesure d'angle comprend un dispositif d'évaluation pour enregistrer la position de l'élément champ (2) dans le plan de rotation (8) déterminée par l'ensemble de détecteurs et son orientation déterminée par l'ensemble de détecteurs par rapport à son orientation des pôles nord-sud à un premier moment, le dispositif d'évaluation étant conçu pour comparer la position de l'élément champ (2) dans le plan de rotation (8) déterminée par l'ensemble de détecteurs à un second moment et son orientation déterminée par l'ensemble de détecteurs par rapport à son orientation des pôles nord-sud avec celle déterminée au premier moment, et déterminer à partir de ces données la position angulaire relative et l'orientation angulaire relative entre le premier et le second moment dans une zone angulaire entre 0 et 2π et/ou la position multitours relative entre le premier et le second moment, qui comprend en plus de la position angulaire relative l'information sur le nombre de tours entre le premier et le second moment.

8. Dispositif de mesure d'angle (1, 20) selon l'une des revendications précédentes, **caractérisé en ce que** les détecteurs (10, 11, 12, 13, 14, 15) se présentent sous la forme de détecteurs magnétiques unidimensionnels ou multidimensionnels.

9. Dispositif de mesure d'angle (1, 20) selon l'une des revendications précédentes, **caractérisé en ce que** le réducteur se présente sous la forme d'un réducteur en cascade.

10. Dispositif de mesure d'angle (1, 20) selon l'une des revendications précédentes, **caractérisé en ce que** le boîtier se présente sous la forme d'une roue dentée fixe (4, 24) et/ou est accouplé solidaire en rotation à la roue dentée (4, 24).

11. Dispositif de mesure d'angle (1, 20) selon l'une des revendications précédentes, **caractérisé en ce que** l'élément champ (2) est fixé au centre d'une roue satellite (3, 29), de telle sorte que l'élément champ (2) et la roue satellite (3, 29) peuvent effectuer ensemble des rotations autour des premier et second axes de rotation (6, 7).

12. Dispositif de mesure d'angle (1, 20) selon la revendication 11, **caractérisé en ce que** le réducteur présente une roue solaire (5, 25) qui est accouplée mécaniquement de manière directe ou indirecte à la roue satellite (3, 29).

13. Dispositif de mesure d'angle (1, 20) selon la revendication 11 ou 12, **caractérisé en ce que** le choix d'un rapport de réduction entre une roue motrice (32, 34) et la roue satellite (3, 29) permet de déterminer une résolution du dispositif de mesure d'angle.

14. Utilisation du dispositif de mesure d'angle (1, 20) selon l'une des revendications précédentes en tant que :
codeur pour déterminer une position et/ou une vitesse angulaire et/ou un axe (22), ou
codeur de position pour déterminer une position absolue d'un objet, en particulier pour la détection mécanique de rotations sans dispositif de comptage électrique pendant les rotations.
